Europäisches Patentamt

European Patent Office

Office européen des brevets

(19)

(11) Numéro de publication: **0 208 575**
**B1**

(12) **FASCICULE DE BREVET EUROPEEN**

(45) Date de publication du fascicule du brevet: **04.04.90**

(21) Numéro de dépôt: **86401226.5**

(22) Date de dépôt: **06.06.86**

(51) Int. Cl.⁵: **B 44 B 5/00,** B 23 K 11/30, B 23 K 35/02

(54) **Procédé d'identification d'un corps de boîte métallique et dispositif mettant en oeuvre un tel procédé.**

(30) Priorité: **02.07.85 FR 8510071**

(43) Date de publication de la demande:
**14.01.87 Bulletin 87/03**

(45) Mention de la délivrance du brevet:
**04.04.90 Bulletin 90/14**

(84) Etats contractants désignés:
**BE DE GB IT NL**

(56) Documents cités:
**CH-A- 595 177**
**DE-A-3 432 797**
**US-A-1 857 166**
**US-A-2 231 132**
**US-A-3 119 289**

(73) Titulaire: **CARNAUD EMBALLAGE**
**65 Avenue Edouard Vaillant**
**F-92100 Boulogne sur Seine (FR)**

(72) Inventeur: **Mergey, Claude**
**34-36 rue de Marnes**
**F-92410 Ville d'Avray (FR)**
Inventeur: **Riviere, Maurice**
**14 Allée des Myosotis**
**F-78390 Bois d'Arcy (FR)**

(74) Mandataire: **CABINET BONNET-THIRION**
**95 Boulevard Beaumarchais**
**F-75003 Paris (FR)**

Courier Press, Leamington Spa, England.

## Description

L'invention concerne un procédé d'identification d'un corps de boîte métallique, combiné au processus de soudage longitudinal matérialisant ledit corps de boîte; elle concerne aussi un dispositif pour la mise en oeuvre d'un tel procédé, incluant des moyens de soudage connus, utilisés et complétés pour assurer en outre l'opération d'identification. L'invention s'applique tout particulièrement à la fabrication et à l'identification des boîtes de conserve.

Il est courant d'appliquer des marques d'identification, sous forme de petites encoches ou déformations, directement sur le métal d'une boîte de conserve et plus particulièrement sur le corps cylindrique de celle-ci. De telles marques représentatives d'un code permettent de reconnaître ultérieurement l'année, voire la date de fabrication de la boîte, sa provenance (c'est-à-dire l'usine où elle a été fabriquée) et même, si nécessaire, la ligne de fabrication sur laquelle elle a été produite. Antérieurement, le corps de boîte était réalisé par agrafage des bords parallèles d'une tôle rectangulaire et par soudage de la zone d'agrafage. Il était courant d'effectuer l'identification au poste de serrage d'agrafe, au moyen d'un "marteau de timbrage" venant frapper le corps de boîte sur la zone d'agrafage. Plus récemment, un procédé de soudure électrique a permis de supprimer l'agrafage. Le procédé consiste à rejoindre deux bords de la tôle destinée à former le corps de boîte et à faire passer la zone de contact entre deux molettes de soudage conductrices entre lesquelles on fait passer un courant électrique pulsé (typiquement une succession de demi-sinusoïdes à la fréquence de 400 Hz) de façon à réaliser une pluralité de soudures par points très rapprochés, assurant une excellente étanchéité de la jonction. Le procédé connu est en outre remarquable par le fait que l'usure et l'oxydation des molettes (qui pourraient entraîner une détérioration rapide de la qualité de soudure) sont évitées en établissant le contact mécanique et électrique entre chaque molette et le bord à souder par l'intermédiaire d'un fil métallique, de préférence légèrement aplati, entraîné, au fur et à mesure de la rotation d'une molette de soudage. Le fil est le plus souvent en cuivre ou en alliage de cuivre. Le défilement de ce fil de cuivre permet de maintenir en permanence un contact "neuf", c'est-à-dire sans trace d'oxydation entre la molette formant électrode d'amenée de courant et la tôle du corps de boîte en formation.

Selon le brevet suisse N° 595 177, le fil de cuivre est écrasé et strié ou moleté sur ses deux faces.

L'invention permet d'assurer l'identification du corps de boîte à peu de frais et sans perte de temps. L'invention découle de la constatation que toute empreinte ou déformation existant sur le fil de cuivre avant son utilisation dans le processus de soudure se reproduit de façon bien visible sur la zone soudée et que, de telles caractéristiques n'altèrent en rien la qualité de la soudure. L'idée de base de l'invention consiste donc à appliquer volontairement des empreintes de marquage au fil conducteur, préalablement à son utilisation dans le processus de soudure pour que ces empreintes se reportent automatiquement le long de la jonction soudée.

Plus précisément, l'invention concerne donc un procédé d'identification d'un corps de boîte métallique réalisé par soudure électrique de deux bords rejoints d'une tôle, ladite soudure s'effectuant entre deux molettes conductrices, par le passage du courant, avec interposition, entre chaque molette et le bord correspondent en cours de soudure, d'un fil conducteur en défilement, caractérisé en ce qu'il consiste à déformer le fil de la molette extérieure audit corps de boîte pour y imprimer des empreintes d'identification avant d'utiliser ce fil dans l'exécution de ladite soudure.

L'invention concerne aussi un dispositif de fabrication d'un corps du boîte métallique, comprenant un poste de soudure électrique équipé de deux molettes de soudage formant électrodes coopérant pour solidariser deux bords rejoints d'une tôle et comprenant des moyens pour faire circuler des fils conducteurs entre les molettes et lesdits bords rejoints en course de soudage, comportant en outre des moyens pour conformer des empreintes sur le fil conducteur de la molette extérieure audit corps de boîte, placés en amont desdites molettes par rapport au sens de défilement du fil conducteur, caractérisé en ce que, ledit fil conducteur étant assujetti à s'enrouler autour d'une partie du périmètre de ladite molette extérieure, les moyens précités pour conformer lesdites empreintes comprennent un galet de marquage muni de stries représentatives d'un code d'identification et un mécanisme pour appliquer à force ledit galet contre ledit fil conducteur plaqué le long du périmètre de ladite molette extérieure.

L'invention apparaîtra plus clairement à la lumière de la description qui va suivre donnée uniquement à titre d'exemple et faite en référence aux dessins annexés dans lesquels:

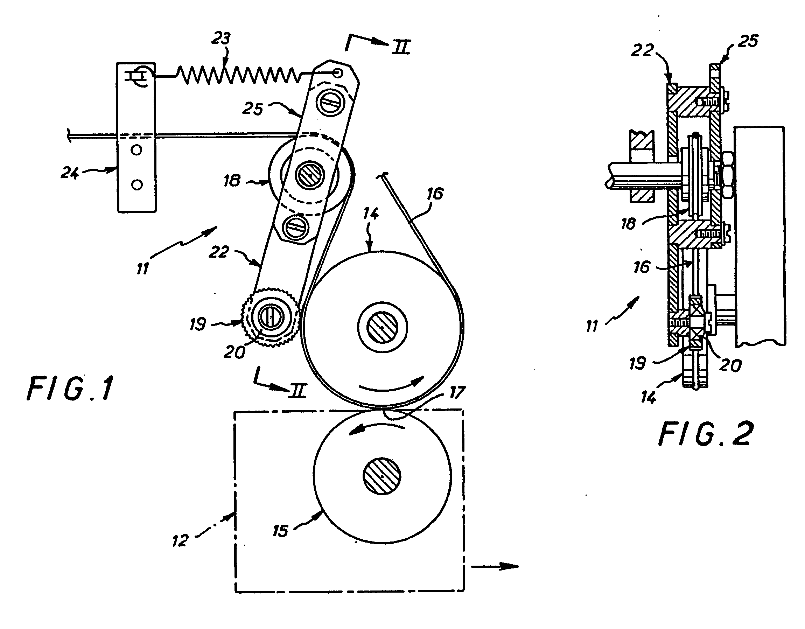

la figure 1 est une vue schématique partielle, en élévation, d'un poste de soudure pour l'élaboration d'un corps de boîte de conserve, incorporant le perfectionnement de l'invention; et

la figure 2 est une coupe partielle II—II de la figure 1.

En se reportant aux dessins, on a représenté un poste de soudure électrique 11 conçu pour réaliser une soudure longitudinale réunissant deux bords rejoints d'une tôle roulée sur elle-même pour définir une sorte de virole, cette soudure matérialisant ainsi le corps 12 d'une boîte à conserve. Le corps de boîte en formation circule le long de moyens de guidage non représentés, dans le sens de la flèche F. Il passe ainsi entre deux molettes de soudage 14 et 15, tournant en sens inverse et est présenté de façon que les bords rejoints de la tôle soient pressés entre les molettes et qu'un courant électrique puisse s'établir entre celles-ci, au travers desdits bords rejoints, en réalisant la soudure par points décrite ci-dessus. La source de courant pulsé raccordé aux axes des molettes 14, 15 formant électrodes est classique et n'a pas été représentée sur les dessins. En outre, un fil de cuivre 16, défilant entre deux réserves non représentées, s'enroule le long d'une partie du périmètre de la molette 14, extérieure au corps de boîte, pour être engagé entre cette dernière et les bords en contact du corps de boîte en formation, de façon à assurer un contact électrique de qualité constante au niveau de la zone de soudure 17 définie entre les deux molettes 14 et 15. Le fil est de préférence légèrement aplati; sa trajectoire est stabilisée, en amont de la molette 14, par son passage dans une poulie à gorge 18. Un agencement analogue, non représenté, fait circuler un autre fil de cuivre entre la molette 15 et le corps de boîte.

Selon l'invention, le dispositif comporte en outre un galet de marquage 19 muni de stries 20, en creux ou en relief, représentatives d'un code d'identification et ce galet est appliqué à force contre le fil 16 grâce à un mécanisme à ressort. Le marquage mécanique du fil se fait bien entendu en amont de la zone de soudure 17 si on considère le sens de défilement de ce fil. Dans l'exemple représenté, le galet 19 est monté en rotation à l'extrémité d'un levier 22 monté pivotant autour de l'axe de la poulie 18 tandis qu'un ressort 23 est monté entre un point fixe 24 et une extrémité 25 de ce levier de façon à solliciter le galet 19 en direction du périmètre de la molette 14. Le galet 19 s'applique ainsi à force contre le fil de cuivre 16 plaqué le long de la molette 14. Le type de marquage est au gré de l'utilisateur. On peut par exemple adopter un marquage classique dans la technique en portant sur le galet des stries définissant une combinaison d'un ou plusieurs groupes de traits inclinés ou droits sur la tranche du galet et se reproduisant sous une configuration équivalente le long de la soudure. On peut aussi adopter une configuration de code à barres dont l'usage se généralise. Dans ce cas, les stries portées sur le galet définissent une combinaison de traits droits d'épaisseurs et d'écartements prédéterminés. Le changement ou la modification du code n'implique que le changement du galet.

**Revendications**

1. Procédé d'identification d'un corps de boîte métallique réalisé par soudure électrique de deux bords rejoints d'un tôle, ladite soudure s'effectuant entre deux molettes conductrices (14, 15), pour le passage du courant, avec interposition, entre chaque molette et le bord correspondant en cours de soudure, d'un fil conducteur (16) en défilement, caractérisé en ce qu'il consiste à déformer (19) le fil de la molette extérieure audit corps de boîte pour y imprimer des empreintes d'identification avant d'utiliser ce fil dans l'exécution de ladite soudure.

2. Dispositif de fabrication d'un corps de boîte métallique, comprenant un poste de soudure électrique équipé de deux molettes (14, 15) de soudage formant électrodes coopérant pour solidariser deux bords rejoints d'une tôle et comprenant des moyens pour faire circuler des fils conducteurs (16) entre les molettes et lesdits bords rejoints en cours de soudage, comportant en outre des moyens (19, 23) pour conformer des empreintes sur le fil conducteur de la molette extérieure audit corps de boîte, placés en amont desdites molettes par rapport au sens de défilement du fil conducteur, caractérisé en ce que, ledit fil conducteur étant assujetti à s'enrouler autour d'une partie du périmère de ladite molette extérieure (14), les moyens précités pour conformer lesdites empreintes comprennent un galet de marquage (19) muni de stries (20) représentatives d'un code d'identification et un mécanisme (22, 23) pour appliquer à force ledit galet contre ledit fil conducteur plaqué le long du périmètre de ladite molette extérieure (14).

3. Dispositif selon la revendication 2, caractérisé en ce que ledit galet est monté en rotation à l'extrémité d'un levier (22) pivotant, en ce qu'un ressort (23) est monté entre un point fixe et une extrémité de ce levier de façon à solliciter ledit galet en direction du périmètre de ladite molette extérieure.

4. Dispositif selon la revendication 2 ou 3, caractérisé en ce que lesdites stries définissent une combinaison d'un ou plusieurs groupes de traits inclinés ou droits, sur la tranche dudit galet.

5. Dispositif selon la revendication 2 ou 3, caractérisé en ce que lesdites stries définissent une combinaison de plusieurs traits droits, sur la tranche dudit galet, les épaisseurs et écartements de ces traits étant choisis selon une configuration de code à barres connu en soi.

**Patentansprüche**

1. Verfahren zur Identifizierung eines Dosenrumpfes aus Metall, der durch elektrisches Verschweißen von zwei zusammengefügten Rändern eines Bleches gebildet worden ist, wobei die genannte Verschweißung zwischen zwei leitenden Rädchen (14, 15) erfolgt, die dem Stromdurchgang dienen, unter Zwischenschaltung eines gewickelten, leitenden Drahtes 16 im Verlauf des Schweißens zwischen jedes der Rädchen und dem korrespondierenden Rand, dadurch gekennzeichnet, daß es in einer Verformung (19) des Drahtes durch das Rädchen außerhalb des Dosenrumpfes besteht, um Identifizierungsabdrücke einzudrücken, bevor der Draht bei der Ausübung der genannten Schweißung verwendet wird.

2. Vorrichtung zum Herstellen eines Dosenrumpfes aus Metall, mit einem elektrischen Schweißgerät, welches mit zwei Schweißrädchen (14, 15) ausgerüstet ist, welche zusammenwirken, um zwei zusammengefügte Ränder eines Bleches zu vereinigen, und welche Mittel umfassen, um leitende Drähte im Verlaufe des Schweißens zwischen den Rädchen und den zusammengefügten Rändern umlaufen zu lassen, und welches unter anderem Mittel (19, 23) aufweist, um auf den leitenden Draht des außerhalb des Dosenrumpfes liegenden Rädchens Abdrücke zu erzeugen, die im Abwicklungssinn des leitenden Drahtes vor dem genannten Rädchen angeordnet sind, dadurch gekennzeichnet, daß der genannte leitende Draht so angeordnet ist, daß er sich um einen Teil des Umfanges des genannten äußeren Rädchens 14 abwickelt, daß die zuvor genannten Mittel zur Ausbildung der genannten Abdrücke eine Markierungsrolle (19) umfassen, die mit Riffelungen (20) versehen ist, welche einen Identifizierungscode repräsentieren, und daß ein Mechanismus (22, 23) vorgesehen ist, um die Rolle mit Kraft gegen den genannten leitenden Draht zu drücken, der um den Umfang des genannten äußeren Rädchens (14) gelegt ist.

3. Vorrichtung nach Anspruch 2, dadurch gekennzeichnet, daß die genannte Rolle drehbar am äußersten Ende eines schwenkbaren Hebels (22) montiert ist und eine Feder (23) zwischen einem festen Punkt und einem Ende des Hebels angeordnet ist, und zwar derart, daß sie die genannte Rolle in Richtung auf den Umfang des genannten äußeren Rädchens vorspannt.

4. Vorrichtung nach Anspruch 2 oder 3, dadurch gekennzeichnet, daß die genannten Riffelungen eine Kombination von einer oder mehreren Gruppen geneigten oder geraden Strichen im Bereich der Schneide der genannten Rolle sind.

5. Vorrichtung nach Anspruch 2 oder 3, dadurch gekennzeichnet, daß die genannten Riffelungen eine Kombination mehrerer gerader Striche auf dem Umfang oder der Schneide der genannten Rolle definieren, wobei die Breite und der gegenseitige Abstand der Striche gemäß einer Konfiguration eines an sich bekannten Strichcodes gewählt.

**Claims**

1. Method for the identification of a metallic can body produced by electric welding of two joined edges of a metal sheet, the said weld being effected between two conductive rollers (14, 15) for the passage of the current, a conductive wire (16) being fed between each roller and the corresponding edge being welded, characterised in that it consists in deforming (19) the wire of the roller to the exterior of the said can body in order to stamp identifying marks thereon before using said wire in the execution of the said weld.

2. Device for the production of a metallic can body comprising an electric welding set provided with two welding rollers (14, 15) forming cooperating electrodes for welding two joined edges of a metal sheet and comprising means for passing the conductive wires (16) between the rollers and the said joined edges being welded, and comprising moreover means (19, 23) for forming the marks on the conductive wire of the roller to the exterior of the can body, said means being disposed upstread of the said rollers with respect to the direction of displacement of the conductive wire, characterised in that the said conductive wire is made to wind around part of the perimeter of the said external roller (14) and the said means for forming the said marks comprise a marking wheel (19) provided with grooves (20) representing an identification code, and a mechanism (22, 23) for pressing the said wheel against the said conductive wire lying along the perimeter of the said external roller (14).

3. Device according to claim 2, characterized in that the said wheel is rotatably mounted at the end of a pivoted lever (22), that a spring (23) is mounted between a fixed point and one end of said lever in such a way that it urges the said wheel in the direction of the perimeter of the said external roller.

4. Device according to claim 2 or 3, characterised in that the said grooves define a combination of one or more groups of inclined or transverse marks on the face of the said wheel.

5. Device according to claim 2 or 3, characterised in that the said grooves define a combination of several transverse marks on the face of the said wheel, the thicknesses and spacings of these marks being selected according to a bar code configuration known *per se*.

FIG.2

FIG.1

1